# FASCICULE DE BREVET EUROPEEN

(11) **EP 2 946 432 B1**
(45) Date de publication et mention de la délivrance du brevet: **22.02.2017**
(21) Numéro de dépôt: 14700730.6
(22) Date de dépôt: 17.01.2014
(51) Int. Cl.: B29C 43/24, B32B 37/10, B32B 41/00, H01M 2/16, H01M 10/0565

(54) **DISPOSITIF DE LAMINAGE, PROCÉDÉ DE LAMINAGE, FILM D'ÉLECTROLYTE AINSI OBTENU ET ENSEMBLE DE STOCKAGE D'ÉNERGIE FORMÉ À PARTIR D'AU MOINS UN FILM AINSI LAMINÉ**
WALZVORRICHTUNG, WALZVERFAHREN, RESULTIERENDE ELEKTROLYTFOLIE UND ENERGIESPEICHERANORDNUNG AUS MINDESTENS EINER DAMIT GEWALZTEN FOLIE
ROLLING DEVICE, ROLLING METHOD, RESULTING ELECTROLYTE FILM, AND POWER STORAGE ASSEMBLY FORMED FROM AT LEAST ONE THUS-ROLLED FILM

(30) Priorité: 18.01.2013 FR 1350473
(43) Date de publication de la demande: 25.11.2015
(73) Titulaire: Blue Solutions, 29500 Ergué Gabéric (FR)
(72) Inventeur: LE GAL, Guy, F-29000 Quimper (FR)
(74) Mandataire: Regimbeau
(86) Numéro de dépôt international: PCT/EP2014/050911
(87) Numéro de publication internationale: WO 2014/111527

(56) Documents cités:
- EP-A2- 1 000 674

## Description

La présente invention concerne le domaine du stockage d'électricité, notamment des batteries ou supercapacités.

Plus précisément, l'invention se situe dans le domaine technique de la fabrication des films destinés à constituer une cathode, une anode ou un électrolyte.

Il est connu de fabriquer de tels films en mélangeant des matériaux destinés à former le film et en extrudant le mélange. Une fois extrudé le matériau passe ensuite dans une filière pour lui donner une forme aplanie. L'épaisseur du film en sortie de filière est généralement d'une ou plusieurs centaines de microns. Pour diminuer l'épaisseur du film jusqu'à l'épaisseur cible, soit une vingtaine de microns environ, on passe ensuite le film dans un laminoir. Pour être plus précis, le film est alors entraîné entre deux cylindres qui exercent sur celui-ci une pression permettant l'écrasement du film, en respect de l'entrefer prédéterminé choisi.

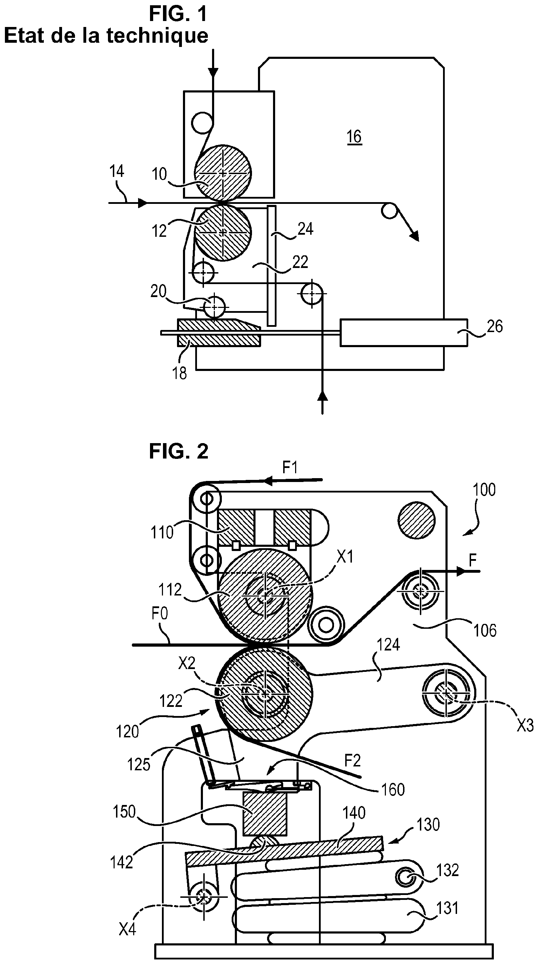

Dans l'état de la technique, on connaît déjà des laminoirs du type schématisé sur la figure 1 annexée comprenant de façon classique un cylindre supérieur 10 et un cylindre inférieur 12 entre lesquels est destiné à passer le film 14. Généralement, le cylindre supérieur 10 est fixe et solidaire du bâti 16, alors que le cylindre inférieur 12 est mobile afin de régler l'écartement entre les deux cylindres qui déterminera l'épaisseur du film en sortie du laminoir. On trouve aussi le montage inverse avec le cylindre inférieur fixe.

La position du cylindre inférieur 12 est réglée de chaque côté, au niveau des extrémités axiales du cylindre, à l'aide d'une cale pentue 18 comprenant une première portion de dégagement avec une forte pente et une deuxième portion de réglage avec une pente très faible (de l'ordre de 1 %).

Cette cale, soulève un galet 20 solidaire de paliers 22 du cylindre inférieur disposés respectivement à chaque extrémité du cylindre. Chaque palier 22 évolue sur une glissière verticale 24 lui permettant d'effectuer une translation relativement au bâti 16. La cale 18 est mobile en translation selon un axe (généralement horizontal) perpendiculaire au mouvement des glissières 24 et sa position est modifiée par un actionneur 26 commandé par un moteur. Du fait que la cale 18 est mobile en translation et est pentue, son déplacement permet de modifier la position verticale du cylindre inférieur 12 (par glissement du palier 22 dans la glissière 24) et ainsi l'écartement des deux cylindres 10 et 12.

Ce type de système connu pose plusieurs problèmes : tout d'abord, lorsqu'un incident se produit et qu'un amas de matière, sortant de la filière et se présentant entre les cylindres 10 et 12, est détecté, il est prévu que la cale 18 soit déplacée par commande de l'actionneur 26, jusqu'à atteindre la pente de dégagement et à écarter alors sensiblement les cylindres 10 et 12 pour laisser passer la surépaisseur de matière. Toutefois, le temps que la cale 18 se dégage est souvent trop long pour pouvoir éviter un endommagement du dispositif (casse ou déformation de la mécanique - cylindres, roulements - due à la surcharge d'effort).

En outre, lorsqu'il est nécessaire de dégager un cylindre 12, on perd le réglage précis de l'épaisseur du film 14. On remarque également que le réglage idéal n'est pas forcément reproductible avec précision du fait de la longue chaîne mécanique existante entre le moteur (qui est l'élément dont on peut régler la position angulaire et qui agit sur la transmission axiale de la cale pentue) et le cylindre inférieur. Le temps de réglage est donc relativement important à chaque démarrage du dispositif de laminage et nécessite généralement plusieurs reprises avant de trouver le bon réglage.

De plus, comme le dispositif présente un système de cale à chaque extrémité longitudinale du cylindre 12, et qu'on ne connaît pas les efforts de contact exercés par les cales, des efforts démesurés peuvent être exercés par erreur lors du réglage du parallélisme des deux cylindres 10, 12 en début de laminage. De même, du fait d'un déséquilibre entre les efforts exercés par les deux cales, il peut exister un défaut de parallélisme entre les deux cylindres 10, 12 produisant une irrégularité de l'épaisseur du film en sens transversal. Pour compenser ce problème, la machine peut être équipée dans l'état de la technique d'un système de réglage (non représenté) de la position des cylindres 10, 12. Un tel système peut par exemple être basé sur l'écrasement mesuré de fils métalliques ductiles (tels que des fils en étain) placés entre les cylindres. Cela nécessite toutefois la présence d'un système de mesure et de réglage supplémentaire et de nouvelles opérations de réglage, souvent avec plusieurs itérations, ce qui est coûteux et consommateur de temps.

Ainsi, on constate que, dans l'état de la technique, l'étape de réglage de l'écartement des cylindres 10, 12 est assez longue et complexe et doit être à nouveau effectuée après chaque incident. Dans ce contexte, l'invention a pour objet de proposer un dispositif de laminage de film qui permet un réglage facilité et une grande précision au niveau de l'épaisseur du film produit, en respect de l'entrefer choisi. L'invention vise ainsi à fournir un dispositif plus simple, et rapide à régler que les dispositifs connus selon l'état de la technique, et évitant d'endommager la mécanique.
Un dispositif selon l'état de la technique connu est par
exemple décrit dans le document EP 1 000 674 A2.

Les objectifs précités sont atteints selon l'invention grâce à un dispositif de laminage comprenant un premier ensemble fixe relié à un bâti du dispositif et comportant au moins un premier cylindre de laminage monté à rotation autour de son axe et un deuxième ensemble, mobile, comportant au moins un deuxième cylindre de laminage monté à rotation autour de son axe, le deuxième ensemble étant mobile selon au moins un degré de liberté relativement au premier ensemble fixe, de sorte que l'axe du deuxième cylindre soit mobile relativement à celui du premier cylindre pour régler l'écartement entre les cylindres, caractérisé en ce que le dispositif de laminage comprend :
- des moyens élastiques de mise au contact qui exercent une première force sur l'ensemble mobile dans le sens d'un rapprochement du premier ensemble fixe, ces moyens élastiques de mise au contact étant configurés pour céder lorsque la force de réaction exercée par l'ensemble mobile sur ceux-ci est supérieure à une force de seuil prédéterminée, et
- des moyens de réglage qui exercent sur l'ensemble mobile une deuxième force ayant une composante essentiellement opposée à la force exercée par les moyens élastiques de mise au contact.

Selon l'invention, les moyens de réglage comprennent des moyens mécaniques qui définissent une butée mécanique réglable pour le deuxième ensemble mobile.

De cette façon, selon l'invention on met en contact les deux cylindres de laminage à l'aide des moyens élastiques de mise en contact et les moyens de réglage permettent de générer une force contraire afin de régler finement la position du cylindre, en compressant légèrement les moyens élastiques. En revanche les différents moyens sont configurés de sorte que la force exercée par le film passant entre les deux cylindres (dans des conditions normales) n'est pas suffisante pour entrainer la compression des moyens élastiques de mise au contact et donc de modifier la position du cylindre.

Comme les moyens de mise en contact sont configurés pour être compressés puis céder lorsque la force de réaction atteint un certain seuil (à savoir le seuil pour lequel on considère qu'il y a un bourrage), l'espace entre les cylindres peut être ouvert sans problème et on évite tout endommagement du dispositif. On notera que la force de seuil correspond aux besoins de laminage plus une force de surcharge pour assurer le contact sur les moyens de réglage et, de fait, la stabilité du système.

Suite à un incident, il suffit alors de replacer les moyens de mise en contact dans leur position initiale définie par la butée mécanique imposée par les moyens de réglage, pour retrouver l'état initial du dispositif sans avoir besoin d'effectuer à nouveau le réglage fin de la position du cylindre. Selon l'invention ce n'est pas en effet les moyens de mise en contact qui permettent d'effectuer le réglage de l'écartement entre les cylindres, mais la butée mécanique des moyens de réglage. Les moyens de réglage restant en place, la position du cylindre mobile est à nouveau automatiquement réglée lorsque les moyens de mise en contact sont remis en fonctionnement.

En outre, les moyens de réglage d'un tel dispositif découplés des moyens permettant le dégagement peuvent de cette façon se trouver au plus près du cylindre mobile, ce qui permet de limiter la longueur de la chaîne mécanique et d'augmenter la précision et la stabilité du réglage ainsi que de diminuer les variations de cotes dues à l'élasticité des pièces mécaniques.

De façon classique, chacun des cylindres de laminage est relié à l'ensemble correspondant (fixe ou mobile) par deux paliers situés chacun à une de leur extrémité et dans chacun desquels est inséré l'axe du cylindre.

De préférence, les moyens élastiques de mise en contact sont configurés pour que les efforts qu'ils appliquent sur l'ensemble mobile soient répartis à égalité sur chaque palier du cylindre. Ce résultat peut être atteint à l'aide d'une jauge de contrainte qui mesure les contraintes exercées sur chacun des paliers du cylindre mobile ou préférentiellement, du fait de la chaîne de transmission des contraintes depuis un unique élément de mise en contact vers les deux paliers, ou lorsque les moyens de mise en contact comprennent deux éléments de mise en contact destinés chacun à transmettre un effort à un des paliers du cylindre, du fait de la nature de cet élément.

L'invention se distingue non seulement structurellement de l'état de la technique, mais présente par ailleurs un réel avantage par rapport à l'état de la technique. En effet selon l'état de la technique, il était nécessaire de régler la position des cylindres à partir d'une mise en contact sans connaître la déformation élastique de l'ensemble de la chaîne mécanique sous un effort donné. Cet inconvénient aurait pu être compensé à l'aide d'une jauge de contraintes mais cette compensation aurait nécessité l'ajout d'encore un élément supplémentaire dans la chaîne mécanique déjà longue.

L'invention permet ainsi de maîtriser de manière plus simple le parallélisme des cylindres, celui-ci apparaissant naturellement lorsque les efforts appliqués sur les deux paliers sont égaux.

De préférence, les moyens élastiques de mise au contact conformes à l'invention comprennent une enveloppe remplie d'un fluide et comprenant une valve de sortie de fluide s'ouvrant lorsque la pression est supérieure à une pression prédéterminée. Les moyens élastiques de mise au contact forment alors des moyens qui peuvent passer d'un état de mise en contact à un état de dégagement de façon totalement réversible, sans qu'il y ait besoin de changer l'une ou l'autre des pièces du dispositif. De préférence, le fluide est un gaz, plus compressible qu'un liquide, et qui permet donc une meilleure marge d'utilisation du dispositif ainsi qu'un escamotage plus rapide. L'enveloppe est par exemple une enveloppe élastique en caoutchouc ou tout moyen équivalent. Un tel système présente l'avantage de ne pas être destructif, lorsque les moyens de mise en contact cèdent.

En outre, il est inutile avec un tel système d'utiliser une jauge de contrainte ou un moyen de mesure de l'effort puisque l'effort F exercé par les moyens de mise en contact est disponible par un simple calcul du produit de la pression P par la surface S de sollicitation impliquée, (F= P * S), chacun des paramètres P et S pouvant être obtenu facilement

Les moyens élastiques de mise en contact peuvent en variante comprendre par exemple un ensemble mécanique assurant une sollicitation élastique de l'ensemble mobile vers une position de contact mais comportant un fusible mécanique intégré (soit un dispositif mécanique à limite de déclenchement préréglée). Un exemple d'un tel fusible mécanique peut être une pièce à amorce de rupture calculée pour céder lorsque l'effort de réaction qui lui est appliqué atteint un seuil correspondant à l'effort résultant d'un bourrage.

Les moyens de réglage comprennent de préférence au moins un levier mécanique comprenant un point d'appui, notamment un axe de rotation, sur un élément solidaire de l'ensemble fixe, le ou l'au moins un des leviers étant également en contact avec l'ensemble mobile et avec un élément de commande de réglage, la distance entre le point de contact avec l'ensemble mobile et le point d'appui étant inférieure à la distance entre le point de contact avec l'élément de réglage et le point d'appui. Cela permet d'obtenir un réglage fin et une multiplication d'effort, l'amplitude du déplacement de l'élément mobile provoqué par le déplacement du levier étant inférieure à l'amplitude du déplacement imposé à l'élément de commande de réglage. De préférence, les moyens de réglage comprennent plusieurs leviers en série. Le rapport entre le déplacement de l'élément de commande de réglage, en entrée, et celui de l'ensemble mobile, en sortie, est choisi de préférence de sorte qu'il soit supérieur à 20 entre l'entrée du moyen de commande et la sortie sur l'ensemble mobile.

Les moyens de réglage comprennent avantageusement des moyens de maintien de la contrainte (ou moyens de rappel) d'au moins un levier. Ces moyens de rappel sont adaptés pour maintenir la chaîne cinématique définie entre l'élément d'entrée de commande de réglage et la butée de sortie, en contact avec l'élément d'entrée de commande. On compense ainsi l'annulation de l'effort de contact (exercé par les moyens élastiques de mise en contact) sur les leviers, par exemple en cas de dégagement. Cela permet un fonctionnement optimal du dispositif de réglage même dans le cas où l'assemblage mécanique n'est pas parfait (annulation des jeux). Cela permet également un maintien en position des moyens de réglage, même en cas d'effacement des moyens élastiques de mise au contact.

L'élément de commande des moyens de réglage comprend avantageusement un dispositif mobile effectuant un appui sur un levier, et entraîné manuellement ou automatiquement. Le dispositif mobile est par exemple une vis manuelle, une came, ou un actionneur électrique avec vis à bille, etc.

Le ou l'au moins un des leviers, d'une part, ou le ou l'au moins un des éléments en contact avec les leviers, d'autre part, est conformé de façon à présenter une zone de contact en saillie de la pièce, définissant un contact ponctuel ou linéaire. Cette zone en saillie permet une bonne reproductibilité dans le contact, de façon à éviter un contact incertain entre les différents éléments du bras de levier tel que cela se produirait si les zones de contact étaient étendues (un contact localisé avec précision tel que préconisé par l'invention permet une meilleure maîtrise des efforts).

Cette zone en saillie peut être réalisée sous forme d'une goupille insérée partiellement dans un évidement de l'élément, ce qui permet d'assurer un contact sur la génératrice d'une pièce résistante. Le contact est alors linéaire. Cette solution est en outre peu coûteuse.

Le dispositif comprend un capteur solidaire d'un élément parmi l'ensemble mobile et l'ensemble fixe et comprenant une portion mobile destinée à entrer en contact avec une butée de l'autre élément parmi l'ensemble mobile et l'ensemble fixe, afin de mesurer le déplacement relatif de l'ensemble mobile du dispositif de laminage. Un tel capteur est de préférence placé de chaque côté du cylindre.

De préférence, l'ensemble mobile est mobile en pivotement relativement à l'ensemble fixe.

On notera que le dispositif de laminage peut comprendre deux bras supports pivotants, un bras étant situé à chaque extrémité du cylindre mobile, entre cette extrémité et le bâti du dispositif de laminage.

Le dispositif peut alors comprendre un axe de pivotement et/ou une ou plusieurs, par exemple deux, barre(s) transversale(s), solidaire(s) de chacun des deux bras remplissant la fonction de dispositif anti-roulis entre les deux extrémités du cylindre mobile, et limitant le décalage angulaire entre ces deux extrémités. Cette ou ces barres transversales permettent donc de limiter le non parallélisme des cylindres et également d'utiliser des roulements de palier pour le cylindre mobile qui n'ont pas besoin de rattraper ce décalage et peuvent permettre un réglage plus précis de la position du cylindre et donc du laminage.

Le dispositif comprend de préférence des moyens de mise en contact et/ou de réglage au niveau de chacun des bras.

Les moyens de réglage au niveau de chaque palier peuvent être liés et réglés ensemble ou indépendamment l'un de l'autre.

Le dispositif peut également comprendre des moyens de décambrage reliant les deux cylindres et permettant d'appliquer sur les axes des cylindres une force compensant la déformation élastique des cylindres (flexion notamment) due à l'effet du laminage sur ceux-ci. De tels moyens sont connus de l'état de la technique.

Le cylindre mobile est généralement le cylindre inférieur du dispositif et les moyens élastiques de mise en contact sont placés sous le cylindre inférieur et exercent une force verticale vers le haut. Le cylindre mobile pourrait toutefois être le cylindre supérieur. Les cylindres peuvent également être placés au même niveau horizontal, la direction de déplacement du film étant alors verticale.

Le point de contact entre l'ensemble mobile et les moyens de réglage est choisi pour être le plus proche possible de l'axe du cylindre mobile afin d'obtenir la meilleure précision de réglage.

L'invention a également pour objet un procédé de mise en marche d'un dispositif selon l'invention, comprenant :
- une première étape lors de laquelle on contraint les moyens élastiques de mise en contact jusqu'à une force de seuil prédéterminée pour qu'ils exercent une force sur le cylindre mobile le mettant en contact avec le cylindre fixe, avec un effort prédéterminé ; et
- une deuxième étape lors de laquelle on s'oppose aux moyens de mise en contact en agissant sur les moyens de réglage de façon à modifier la position du cylindre mobile.

Par « contact avec un effort prédéterminé », on entend non seulement que les cylindres sont en contact mais également que le cylindre mobile applique sur le cylindre fixe une force prédéterminée. Cette force prédéterminée est choisie pour être équivalente à la force appliquée au film lors de son passage dans le laminoir. On rappelle que dans les systèmes antérieurs, il est difficile de contrôler la force appliquée entre les cylindres.

Le dispositif comprend deux capteurs de déplacement de l'ensemble mobile et, lorsque l'on détecte à l'aide de chaque capteur le début du déplacement de l'ensemble mobile relativement à l'ensemble fixe (correspondant par exemple, au décollement d'un micron du cylindre mobile relativement au cylindre fixe), on initialise un zéro de référence (la prise d'origine du réglage de chaque capteur).

On continue ensuite d'agir sur les moyens de réglage pour arriver à l'écartement choisi en fonction de l'épaisseur du produit, l'écartement étant mesuré à l'aide des capteurs.

L'invention concerne de plus un électrolyte d'une épaisseur inférieure à 15 microns, dont la variation d'épaisseur selon une coupe transversale ou longitudinale est inférieure à +/- 2 microns (soit une variation maximale de 4 microns en tout) pour une largeur de l'ordre de 30cm. Un tel électrolyte est obtenu à l'aide du procédé décrit précédemment et présente des caractéristiques très avantageuses en terme de régularité. Un tel électrolyte permet de réduire la résistance interne des batteries formées à partir d'un tel film et d'augmenter la capacité de stockage.

Lorsque la largeur est moindre (150mm par exemple), l'épaisseur peut être d'épaisseur inférieure ou égale à 10 microns alors que la variation d'épaisseur selon une coupe transversale est inférieure à +/- 2 microns.

Un tel électrolyte est obtenu par laminage, notamment laminage à chaud.

L'électrolyte comprend au moins un polymère et un sel de lithium, notamment au moins deux types de polymères, tel que le polyfluorure de vinylidène (PVDF) et les polymères d'oxyde d'éthylène (POE). Le sel de lithium est du LiTFSI (sel de bis(TriFluoromethylSulfonyl)Imide de Lithium).

L'invention concerne par ailleurs un ensemble de stockage d'énergie, notamment une batterie, comprenant un tel électrolyte.

D'autres caractéristiques, buts et avantages de la présente invention apparaitront à la lecture de la description détaillée qui va suivre et en regard des dessins annexés donnés à titre d'exemple non limitatif et sur lesquels :
- la figure 1 précédemment décrite représente schématiquement un exemple de réalisation d'un dispositif conforme à l'état de la technique,
- la figure 2 représente schématiquement un dispositif de laminage conforme à un premier mode de réalisation de la présente invention,
- la figure 3 représente schématiquement les moyens de réglage de position du cylindre mobile du premier mode de réalisation de la présente invention,
- la figure 4 représente schématiquement un mode de réalisation de moyens de détection micrométrique du déplacement de moyens de réglage conformes à l'invention,
- les figures 5 et 6 représentent schématiquement des dispositifs de laminage conformes à un deuxième et un troisième modes de réalisation de la présente invention et
- la figure 7 représente également schématiquement une autre variante de dispositif de laminage intégrant les caractéristiques de l'invention.

On va maintenant décrire le dispositif 100 représenté sur la figure 2 annexée, conforme à un mode de réalisation de la présente invention.

De façon classique, le dispositif 100 comprend un bâti 106 qui porte un ensemble fixe 110 comportant un cylindre supérieur 112 d'axe X1 essentiellement horizontal et un ensemble mobile 120 comprenant un cylindre inférieur 122 d'axe X2 essentiellement horizontal et parallèle à l'axe X1 du cylindre supérieur 112. Le cylindre supérieur 112 est guidé et entraîné à rotation autour de son axe X1 par tous moyens appropriés. De même le cylindre inférieur 122 est guidé et entraîné à rotation autour de son axe X2 par tous moyens appropriés. Entre ces cylindres 112 et 122 est destiné à être entraîné un film F, tel qu'un film de composition d'une batterie, par exemple cathode ou électrolyte.

Les ensembles fixe 110 et mobile 120 comportent chacun deux paliers situés respectivement à leurs extrémités axiales, destinés à supporter à rotation les cylindres 112 et 122 autour des axes X1 et X2. De préférence chacun de ces paliers comprend un logement dans lequel est inséré un tourillon d'un seul tenant avec le cylindre respectivement associé 112 ou 122. Les tourillons sont mobiles à rotation relativement aux paliers et matérialisent l'axe de rotation X1 et X2 de chacun des cylindres 112, 122.

Le cylindre supérieur 112, ou plus exactement ses paliers, sont solidaires du bâti 106 du dispositif et est donc considéré comme un cylindre fixe.

Le cylindre inférieur 122, plus exactement chacun de ses paliers, est solidaire d'un bras support 124. Un bras 124 est donc présent à chaque extrémité du cylindre inférieur 122. Les bras 124 appartiennent à l'ensemble mobile 120 et sont mobiles à pivotement relativement au bâti 106 autour d'un même axe X3 essentiellement horizontal, et parallèle aux axes de rotation X1, X2 des cylindres 112 et 122. Cet axe X3 est appelé axe d'articulation des bras 124 et est situé à distance de l'axe X2 du cylindre inférieur. L'axe d'articulation X3 de chaque bras 124 et l'axe de rotation X2 du cylindre inférieur 122 sont placés aux deux extrémités opposées des bras 124.

Le bâti 106 comprend également, en partie inférieure, des moyens élastiques 130 de mise en contact adaptés pour exercer sur l'ensemble mobile 120 une première force tendant à appliquer le cylindre inférieur mobile 122 en contact avec le cylindre supérieur fixe 112.

Comme on l'a évoqué précédemment, ces moyens élastiques 130 de mise en contact sont cependant adaptés pour céder lorsqu'une force de réaction exercée sur l'ensemble mobile 120 est supérieure à une force de seuil prédéterminée.

Selon le mode de réalisation représenté sur la figure 2, les moyens élastiques 130 de mise en contact comprennent un élément pneumatique 131 constitué par une enveloppe souple et déformable, par exemple en caoutchouc ou tout matériau équivalent, délimitant une cavité fermée de volume variable, destinée à être remplie d'un fluide tel que de l'air. L'élément pneumatique 131 est relié à son extrémité supérieure à une plaque d'appui 140 également reliée au bâti 106 à l'une de ses extrémités par un axe d'articulation X4 horizontal et parallèle également à ceux des cylindres 112 et 122. La plaque d'appui 140 comporte sur sa face supérieure un bossage 142 semi-cylindrique, dont la génératrice s'étend parallèlement à l'axe X4, permettant d'obtenir un appui linéaire avec une barre inférieure 150 superposée, essentiellement horizontale, appartenant à l'ensemble mobile 120. La barre 150 relie les deux bras 124 et est solidaire de ceux-ci.

Comme on le voit sur la figure 2, la barre 150 relie de préférence deux ailes secondaires 125 des bras 124 faisant saillie vers le bas au niveau de l'extrémité des bras 124 opposée à l'axe d'articulation X3 et qui porte le cylindre inférieur 122.

L'élément pneumatique 131 peut comprendre un clapet de sécurité (ou clapet de décharge) reliant le volume interne de la cavité avec l'extérieur et qui permet de faire sortir l'air rapidement de la cavité lorsque la pression dans celle-ci devient trop élevée. Un tel clapet est schématisé sous la référence 132 sur la figure 2.

L'élément pneumatique 131 est centré relativement au cylindre 122, à mi longueur de celui-ci, et la plaque d'appui 140 est en contact linéaire sur la barre de liaison 150 sur toute sa longueur. Ainsi les efforts générés par l'élément pneumatique 131 sont répartis également sur chaque palier du cylindre inférieur 122 et le parallélisme des cylindres 112 et 122 est parfaitement maîtrisé.

Ainsi, les moyens de mise en contact 130 sont adaptés pour exercer une force de direction essentiellement verticale vers le haut sur la barre 150, et donc le cylindre inférieur 122 : de ce fait, lorsque l'on gonfle l'élément pneumatique 131, la plaque d'appui 140 et le bossage 142 sont entraînés vers le haut selon un trajet dicté par l'axe d'articulation X4 de la plaque d'appui 140. Comme les bras 124 et la barre inférieure 150 possèdent un degré de liberté à pivotement relativement au bâti 106, ils ne s'opposent pas au mouvement de la plaque d'appui 140 et se déplacent selon un trajet dicté par la liaison autour de l'axe d'articulation X3 des bras 124. Le cylindre inférieur 122 est mis en contact par ce biais avec le cylindre supérieur 112. Les deux bras 124 sont reliés par le biais de la barre de liaison inférieure 150 et par le biais de l'arbre matérialisant l'axe d'articulation X3 des bras 124.

L'ensemble composé par la barre 150 et l'arbre matérialisant l'axe X3, sachant que cet axe est relié mécaniquement aux bras de façon à être solidaire de ceux-ci, par exemple par une collerette avec une ceinture de vis ou un goupillage, constitue un dispositif anti-roulis efficace qui participe à assurer également le parallélisme des cylindres 112 et 122. En effet, une liaison angulaire est formée entre les bras, à savoir que ceux-ci ne peuvent se décaler angulairement l'un par rapport à l'autre que dans une très faible latitude. On protège donc les roulements des paliers du cylindre, qui peuvent être de ce fait choisis pour avoir une très grande précision et améliorer la précision du laminage.

On notera que, sans que cela soit obligatoire, le bossage 142 qui détermine le point d'application de l'effort généré par l'élément pneumatique 131 sur la barre 150, est situé entre l'axe X4 et le point d'application de la force de l'élément pneumatique 131 sur la plaque d'appui 140. Cette disposition permet de multiplier l'effort appliqué sur la barre 150 par rapport à celui appliqué à la plaque d'appui 140 par l'élément pneumatique 131. Ainsi à titre d'exemple non limitatif, la distance entre le point d'application de la force de l'élément pneumatique 131 sur la plaque d'appui 140 et l'axe X4, est supérieure d'environ deux fois à la distance entre le bossage 142 et l'axe X4, ce qui permet de doubler l'effort appliqué sur la barre 150 par rapport à celui appliqué à la plaque d'appui 140 par l'élément pneumatique 131.

On notera que le système permet d'assurer un parallélisme des cylindres 112 et 122 lorsque ces derniers ne sont pas en contact (pendant l'ouverture et le rapprochement des cylindres 112 et 122) mais le parallélisme final au micron des cylindres 112 et 122 est de préférence assuré à l'aide d'un système qu'on décrira par la suite.

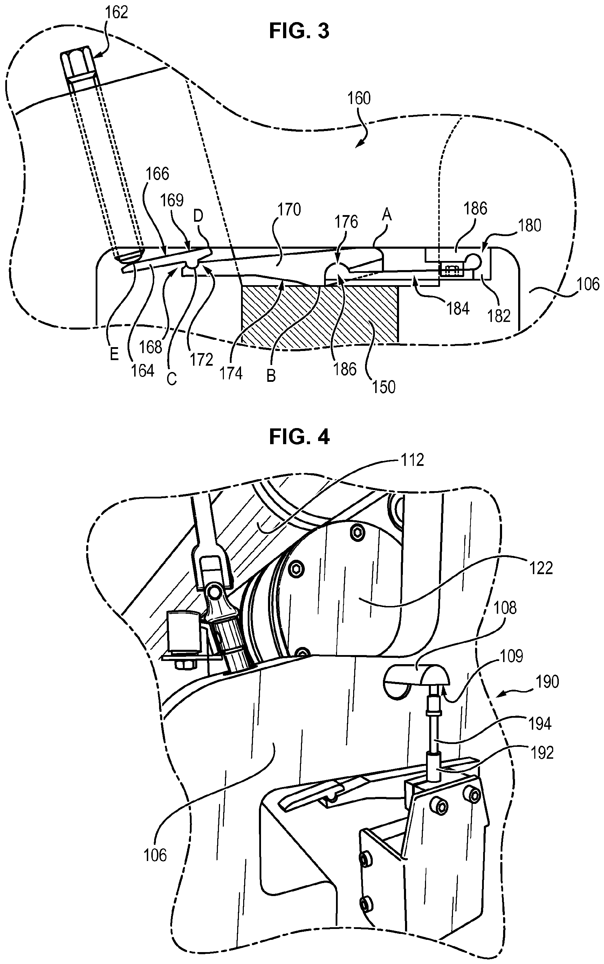

Comme on le voit également sur la figure 2, le dispositif conforme à la présente invention comprend de préférence des moyens de réglage fin 160, représentés plus en détails sur la figure 3. Ces moyens 160 permettent le réglage de l'entrefer entre les cylindres 112 et 122.

Des moyens de réglage 160 sont placés au voisinage de chaque extrémité longitudinale du cylindre inférieur 122 (soit au voisinage de chaque bras 124). Autrement dit, les moyens de réglage 160 comportent 2 dispositifs identiques à celui qui va être décrit ci-dessous.

Selon le mode de réalisation préférentiel représenté sur la figure 3, les moyens de réglage 160 comprennent au moins un levier formant une butée mécanique réglable pour l'ensemble mobile, intercalé entre ledit ensemble mobile et un moyen de réglage d'entrée. Plus précisément il est prévu deux leviers 164 et 170 placés en série entre le moyen de réglage d'entrée, formé d'une vis 162, et l'ensemble mobile 120, et un moyen de rappel 180 adapté pour maintenir la chaîne mécanique des leviers en appui sur la vis de réglage 162 lors d'un escamotage des moyens élastiques 130 de mise au contact.

L'utilisation d'au moins un levier, et de préférence deux leviers en série, permet un réglage fin de la position de la butée définie pour l'ensemble mobile 120 en assurant une démultiplication de la course d'un moyen de réglage en entrée 162 et inversement une multiplication de l'effort transmis.

Plus précisément encore, selon le mode de réalisation préférentiel représenté sur la figure 3, les moyens de réglage 160 comprennent tout d'abord une vis de réglage 162 apte à être commandée manuellement et fixée au bâti 106 (le bâti 106 joue le rôle d'écrou fixe associé à la vis 162). Les moyens de réglage 160 comprennent également un premier levier 164, comportant un bras essentiellement horizontal 166 et une saillie inférieure semi-cylindrique 168. La saillie inférieure 168 est destinée à être placée dans un évidement 172 de forme essentiellement complémentaire ménagé dans un deuxième levier 170 appartenant aux moyens de réglage 160.

Chaque deuxième levier 170 comprend un bras essentiellement horizontal 174 comportant à une première extrémité l'évidement 172 ouvert vers le haut pour recevoir la saillie 168. A l'autre extrémité du bras 174, le deuxième levier 170 comprend également un deuxième évidement 176 ouvert vers le bas et accueillant un moyen de rappel 180.

Les premiers et deuxième leviers 164 et 170 sont réalisés en un matériau métallique, par exemple en acier traité, et sont rigides. On notera également que les leviers 164 et 170 sont reliés au niveau de la saillie 168 - évidement 172 par une goupille verticale 169, l'un des leviers 164 ou 170 comportant un trou oblong qui reçoit la goupille précitée 169 pour permettre de réaliser l'immobilisation relative transversale des leviers 164 et 170 tout en conservant une liberté de pivotement angulaire du levier 164 par rapport au levier 170, par déplacement de la saillie 168 dans l'évidemment 172.

Chaque dispositif de réglage 160 comprend également un moyen de rappel 180. Un tel moyen de rappel peut faire l'objet de différents modes de réalisation.

Selon le mode de réalisation illustré sur la figure 3, ce moyen de rappel 180 est constitué par une lame de ressort 182 en U comprenant un bras inférieur 184 et un bras supérieur 186 formant embase. La lame 182 est reliée par l'embase supérieure 186 au bâti 106. Le bras inférieur 184 possède une saillie 186 orientée vers le haut à son extrémité libre, cette saillie 186 étant complémentaire de l'évidement 176 du deuxième levier 170, dans lequel elle est insérée.

Ce ressort 180 est précontraint et la saillie 186 constitue donc une empreinte permettant de maîtriser la position des leviers 164 et 170, que les moyens de mise en contact 130 soient activés ou non, et que le deuxième levier 170 soit ou non en contact avec la barre de liaison inférieure 150.

Le dispositif de réglage 160 fonctionne de la façon suivante : le deuxième levier 170 prend appui sur le bâti 106 en A, est en contact avec la barre inférieure 150 en B et avec le premier levier 164 en C, à l'endroit où la saillie 168 est insérée dans l'évidement 172. Le lieu de contact A est situé à l'extrémité du levier 170 opposée à l'endroit où se trouve l'évidement 172. Le premier levier 164 est également en appui sur le bâti 106 en D à une première extrémité du bras de levier 164 et avec la vis de réglage 162 en E à l'extrémité opposée du bras 164. On notera que les lieux de contact précités entre les différents éléments sont des lignes essentiellement parallèles aux axes X1 et X2 des cylindres 112, 122 sauf l'appui de la vis 162 sur le premier levier 164 en E qui est un appui quasi-ponctuel.

Ainsi, le dispositif de réglage 160 est apte à exercer par le biais du point de contact en B du deuxième levier 170 une force de direction essentiellement verticale vers le bas sur la barre de liaison inférieure 150, et donc sur le cylindre inférieur 122 attaché par ses paliers à cette barre 150.

Comme on le voit sur la figure 3, lorsque l'on serre la vis de réglage 162, elle entraîne la première extrémité du premier levier 164 vers le bas (point d'appui E). Le point d'appui en C s'abaisse donc également du fait de la réaction au niveau du point de réaction D sur le bâti 106 et entraîne l'extrémité correspondante du deuxième levier 170 (en C également) vers le bas. De ce fait, le point B du deuxième levier 170 en contact avec la barre horizontale 150, exerce une force verticale vers le bas sur la barre 150 en B et se déplace vers le bas par rapport à la réaction fixe en A. Cela permet de modifier la position de la barre 150 et donc du cylindre inférieur 122. En effet, les moyens de mise en contact 130 étant déformables élastiquement, la force exercée par le deuxième levier 170 sur la barre 150 est suffisante pour que l'air à l'intérieur de l'enveloppe 131 soit compressé et que la position de la barre 150 soit modifiée du fait de l'action des moyens de réglage 160.

On remarquera qu'à l'aide du dispositif de réglage 160, on peut appliquer à la barre 150 un déplacement moindre que celui imprimé verticalement à la vis 162 alors que la force verticale appliquée sur la barre de liaison inférieure 150 est bien supérieure à celle qu'il est nécessaire d'imprimer sur la vis 162 pour déplacer cette dernière dans le même rapport. Cela est possible du fait des rapports de distance, respectivement entre les points C et D et les points D et E pour le premier levier 164 (distance DE > distance DC) et entre les points A et C et A et B pour le deuxième levier 170 (distance AC > distance AB). En effet, le rapport de la force à la sortie du système sur la force à l'entrée du système correspond au rapport des distances (AC/AB)*(DE/DC). Le rapport entre le déplacement en sortie et le déplacement en entrée est l'inverse de celui-ci. Les rapports peuvent être adaptés au degré de précision souhaité. Dans le cas représenté, ils sont de AC/AB = 3 et DE/DC = 4, soit un rapport total de 12.

Le dispositif de laminage conforme à la présente invention comprend également de préférence au voisinage de chaque dispositif de réglage 160, soit à chaque extrémité du cylindre mobile 122, un dispositif de détection ou comparateur micrométrique 190 illustré sur la figure 4.

Un tel dispositif de détection ou comparateur micrométrique 190 peut faire l'objet de différents modes de réalisation.

Selon le mode de réalisation représenté sur la figure 4 ce dispositif 190 comprend un corps 192 (capteur de position micrométrique) solidaire de la barre de liaison inférieure 150 et comprenant un palpeur mobile 194 en translation relativement au corps 192 selon une direction essentiellement verticale. Un capteur placé dans le corps 192 détecte le mouvement du palpeur 192. Le bâti 106 est muni d'une butée 108 ayant une surface de contact 109 essentiellement horizontale et destinée à être en contact avec l'extrémité libre supérieure du palpeur 194.

Les dispositifs de détection 190 (ou comparateurs micrométriques) permettent d'assurer avec précision, par exemple au dizième de micron près, le parallélisme des cylindres 112 et 122, comme expliqué ci-après.

On va maintenant décrire certaines étapes principales du procédé de mise en oeuvre du dispositif précité, conforme à la présente invention.

On met le dispositif en marche de la façon suivante.

Avant d'engager le ou les matériaux destinés à constituer le film F en sortie de laminage, on gonfle l'élément pneumatique 131 jusqu'à une certaine pression, mettant ainsi en contact le cylindre inférieur 122 et le cylindre supérieur 112 avec un effort prédéterminé. Cet effort correspond à l'effort de travail appliqué au film F lors de son passage dans le laminoir. Cet effort est facile à déterminer dans le dispositif selon l'invention puisqu'il est directement déductible de la pression appliquée sur l'élément pneumatique 131, cette pression étant un paramètre facilement mesurable. Le palpeur 194 est alors en contact avec la butée 108 du bâti 106.

On actionne le dispositif de réglage 160 de façon à légèrement diminuer l'effort de contact entre les cylindres 112 et 122 jusqu'à percevoir un premier mouvement du palpeur 194 (détection par le capteur intégré au corps 192). Cela signifie qu'on a légèrement décomprimé le contact mécanique entre les cylindres 112 et 122 (visible par l'indication des palpeurs). On remet alors les capteurs intégrés aux corps 192, à zéro, pour qu'ils indiquent une position de référence. On notera que la position de référence des deux dispositifs de réglage 160 situés à chaque extrémité du cylindre 122 n'est pas forcément atteinte simultanément. Les dispositifs de réglage situés de chaque côté du cylindre étant décorrélés, on peut néanmoins atteindre le parallélisme des cylindres.

On écarte encore les cylindres 112 et 122, grâce aux moyens de réglage 160, pour obtenir l'entrefer désiré. Celui-ci est indiqué par les capteurs 192.

On applique aux moyens élastiques de mise en contact 130 un effort supplémentaire pour augmenter l'effort sur les dispositifs de réglage 160 (on observera que une fois réglés, les moyens de réglage 160 maîtrisent l'entrefer entre les cylindres 112 et 122) et avoir une butée stable même en cas de légères variations de l'effort nécessaire pour écraser le film F.

Si un problème survient, et qu'un bourrage intervient au niveau de l'espace entre les 2 cylindres 112 et 122, le cylindre inférieur 112 applique une force verticale vers le bas sur l'élément pneumatique 131, ce qui compresse l'air à l'intérieur de cet élément 131 et permet un léger écartement des cylindres 112 et 122 (par mouvement du cylindre inférieur 122). Si une pression supérieure à une pression prédéterminée est atteinte dans l'élément 131, cela est susceptible de déclencher le clapet de dégagement 132. L'air s'échappe donc de l'élément pneumatique 131 qui se dégonfle, ce qui permet la retombée de la barre horizontale 150 et libère ainsi complètement le mouvement du cylindre inférieur 122, arrêtant ainsi la rotation des cylindres 112 et 122 (grâce à une détection du mouvement de ce cylindre inférieur 122) et le laminage.

Dans ce cas, on notera que les moyens de réglage 160 sont maintenus en place à l'aide des moyens de rappel 180 qui assurent un contact ferme et sans jeu de l'ensemble des leviers de réglage 164 et 170. De cette façon, lors de la remise en situation de production, par remise en pression ultérieure de l'élément 131, on retrouve la position initiale des cylindres 112 et 122 sans réglage complémentaire.

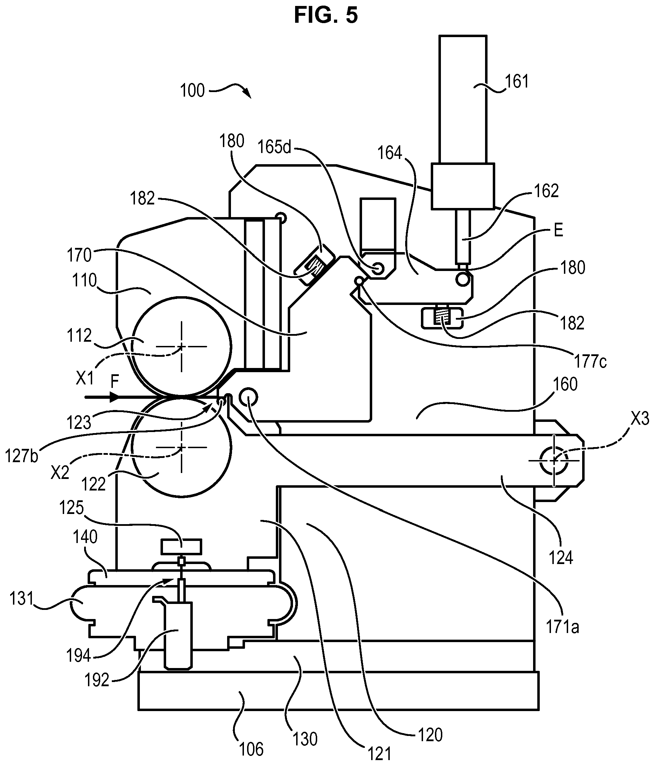

On va maintenant décrire le deuxième mode de réalisation de l'invention représenté sur la figure 5 annexée.

On retrouve sur cette figure 5 un dispositif 100 qui comporte un bâti 106 (partiellement représenté sur la figure 5) qui porte un ensemble fixe 110 comportant un cylindre supérieur 112 et un ensemble mobile 120 comportant un cylindre inférieur 122, sollicité vers le cylindre supérieur 112 par des moyens de mise en contact 130 comprenant un élément pneumatique 131 en appui contre une barre horizontale reliant deux bras articulés qui supportent à rotation le cylindre inférieur 122 et s'étendant entre ceux-ci.

Le mode de réalisation illustré sur la figure 5 se distingue essentiellement du mode de réalisation précédemment décrit en regard des figures 2 à 4, par la structure des moyens de réglage 160. Les moyens de réglage 160 illustrés sur la figure 5 comprennent en effet là encore, à chaque extrémité du cylindre 122, un ensemble de deux leviers 164 et 170 intercalés entre l'ensemble mobile 120 et une vis de commande 162. Cependant les deux leviers 164 et 170 sont non pas en contact avec une barre horizontale située sous les bras du cylindre inférieur 122 mais directement avec le palier 121 du cylindre inférieur 122, dans une zone 123 au plus près de l'axe X2 du cylindre inférieur 122 et de l'endroit où passe le film F entre les cylindres 112 et 122.

Les moyen de réglage 160 illustrés sur la figure 5, prévus sur chacune des extrémités de l'ensemble mobile 120, sont à commande numérique, ce qui permet d'incrémenter les dispositifs de réglage 160 de façon parallèle.

Selon le mode de réalisation illustré sur la figure 5, pour que la liaison entre les différents leviers soit la plus précise possible, on a muni chaque élément au niveau duquel doit se faire un contact (le palier 120 et l'un 170 des leviers) d'une goupille 127, 177 insérée dans un évidement prévu à cet effet du palier 121 ou du levier 170 et permettant d'obtenir un contact linéaire entre les différents éléments si nécessaire.

Plus précisément on retrouve sur la figure 5 un levier primaire 164 articulé sur le bâti 106 en 165 (D). Il est en appui contre l'extrémité de la vis 162 en E et prend lui-même appui en C sur la goupille 177 liée au levier secondaire 170.

Le levier secondaire 170 est articulé sur le bâti 106 en 171 (A). Il est en appui contre la goupille 127 solidaire du palier 121 du cylindre inférieur 122, en B.

Dans le mode de réalisation illustré sur la figure 5, les moyens de rappel 180 comprennent plusieurs ressorts 182 qui sont précontraints en compression.

Plus précisément selon le mode de réalisation illustré sur la figure 5, il est prévu un moyen de rappel 180 comprenant un ou des ressorts 182, associé respectivement à chacun des deux leviers 164 et 170.

Selon le mode de réalisation particulier et non limitatif illustré sur la figure 5, le rapport du premier levier 164 est de 4 et celui du second levier 170 est de 6.

La vis de réglage 162 des moyens de réglage 160 est entrainée cette fois par un moteur 161. Ce moteur 161 peut être commandé en boucle fermée, en fonction de mesures effectuées en sortie du laminoir.

On notera également que selon la figure 5, les leviers 164 et 170 sont non pas en appui contre le bâti 106 mais sont reliés au bâti 106 par des axes respectifs 165 et 171 autour desquels les leviers 164 et 170 peuvent pivoter. Les axes de rotation 165 et 171 des leviers 164 et 170 ont toutefois le même rôle que les point d'appui C et D du mode de réalisation précédent, permettant une multiplication des efforts et une division des distances de déplacement entre l'entrée et la sortie d'un levier.

Le dispositif de détection 190 comprend également un capteur muni d'un corps 192 et d'un palpeur 194 mais le corps 192 est cette fois solidaire du bâti 106 et vient en butée contre une saillie 125 du bras 124 appartenant à l'ensemble mobile 120.

Les autres modifications comprennent notamment le fait que l'appui du palier 121 sur l'élément pneumatique 131 est un appui direct par l'intermédiaire de la plaque d'appui 140 et non un appui par le biais d'une liaison pivot comme décrit précédemment en regard de la figure 2 où la plaque d'appui était montée elle-même en pivotement (pas de démultiplication des efforts).

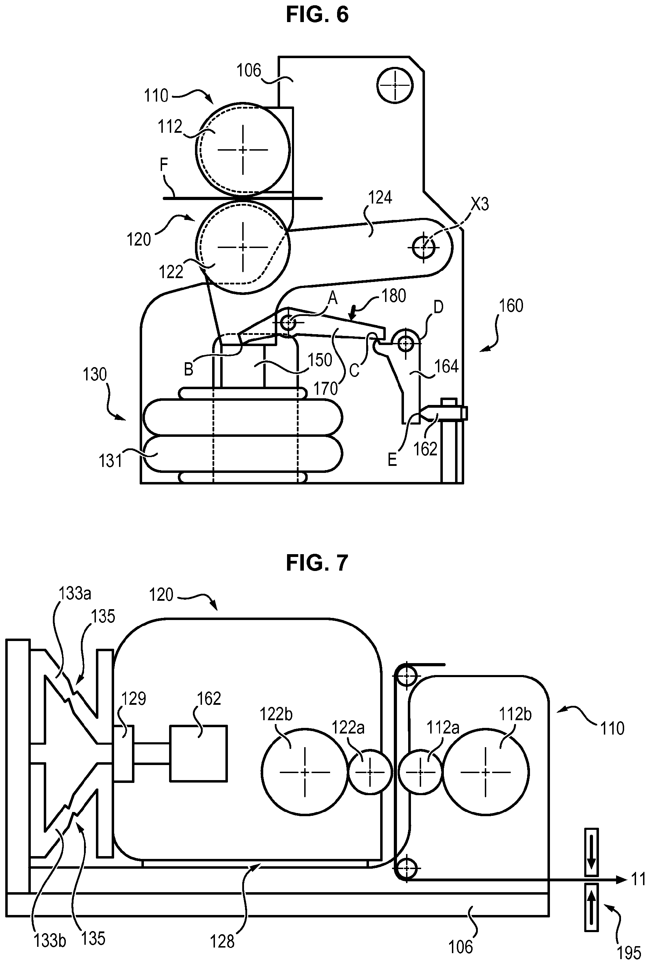

On va maintenant décrire le troisième mode de réalisation de l'invention représenté sur la figure 6 annexée.

On retrouve également sur cette figure 6 un dispositif 100 qui comporte un bâti 106 qui porte un ensemble fixe 110 comportant un cylindre supérieur 112 et un ensemble mobile 120 comportant un cylindre inférieur 122, sollicité vers le cylindre supérieur 112 par des moyens de mise en contact 130 comprenant un élément pneumatique 131 associé à une barre horizontale 150 reliant deux bras 124 articulés en X3 et qui supportent à rotation le cylindre inférieur 122.

On retrouve également sur la figure 6 des moyens de réglage 160 comprenant deux leviers 164 et 170 intercalés entre l'ensemble mobile 120 et une vis de commande 162 liée au bâti 106.

Le levier primaire 164 est articulé sur le bâti 106 en D. Il est en appui contre l'extrémité de la vis 162 en E et prend lui-même appui sur le levier secondaire 170 en C. Le rapport de distance DE/DC est supérieur à 1 pour respecter la multiplication d'effort précitée.

Le levier secondaire 170 est articulé sur le bâti 106 en A. il est en appui contre la barre 150 liée à l'ensemble mobile inférieur 120 en B. Le rapport de distance AC/AB est également supérieur à 1 pour respecter la multiplication d'effort précitée.

Des moyens de rappel 180 sollicitent le levier secondaire 170 contre l'effort exercé par la vis de réglage 162. Ainsi même en cas d'effacement des moyens élastiques de mise en contact 130, le levier secondaire 170 reste en appui contre le levier primaire 164 et le levier primaire reste en contact avec la vis de réglage 162.

Bien entendu, les modes de réalisation précédemment décrits ne sont pas limitatifs. La présente invention englobe toutes variantes conformes à son esprit.

La figure 7 regroupe d'ailleurs dans un mode de réalisation particulier diverses variantes de réalisation conformes à l'invention, qui vont maintenant être décrites.

Selon une première variante conforme à la présente invention, l'élément pneumatique 131 peut être remplacé par un élément mécanique élastique 133 intégrant un fusible mécanique, par exemple un ressort précontraint avec amorce de rupture 135 tel que schématisé sur la figure 7. On notera également que la forme de l'enveloppe élastique de l'élément pneumatique n'est pas limitée à ce qui a été décrit dans les modes de réalisation précédents.

Le dispositif conforme à la présente invention peut d'ailleurs comprendre plusieurs moyens de mise en contact 130 juxtaposés. Ainsi plus précisément sur la figure 7 annexée on a représentée deux éléments mécaniques élastiques de mise en contact, 133a et 133b, en parallèle entre le bâti 106 et l'ensemble mobile 120.

Selon une autre variante conforme à la présente invention, les moyens de réglage 160 peuvent ne pas comporter des leviers et comprendre une simple vis de réglage manuel 162 (ou tout moyen équivalent par exemple une vis motorisée, une came, ou un actionneur électrique avec vis à bille, etc.) appuyant directement sur le palier 121 ou le bras 124 du cylindre inférieur 122, voire une cale pentue prenant appui sur une zone du palier mobile. Sur la figure 7 on a schématisé un tel actionneur de réglage sous la référence 162 sollicitant directement une butée 129 liée au palier 121 de l'ensemble mobile 120.

Selon une autre variante conforme à la présente invention, la liaison du cylindre mobile 122 et du bâti 106 peut ne pas être une liaison pivot par le biais de bras pivotants 124, mais une liaison glissière rectiligne 128 transversale à la direction de laminage, comme schématisé sur la figure 7.

Selon une autre variante de l'invention, les deux moyens de réglage 160 situés de part et d'autre du cylindre inférieur 122 peuvent être également asservis de la même manière et non indépendants.

Le dispositif conforme à la présente invention peut également comprendre des moyens de dé-cambrage qui permettent d'éviter que les cylindres supérieurs 112 ne fléchissent légèrement en leur centre sous l'effet de la poussée due à l'écrasement du produit.

Le dispositif mobile, lorsqu'il est commandé automatiquement, est éventuellement commandé en cours de fabrication du film en fonction des données obtenues depuis un capteur de mesure, notamment d'épaisseur, disposé en sortie du laminoir. Un tel capteur d'épaisseur est schématisé sous la référence 195 sur la figure 7.

Comme indiqué précédemment le cylindre mobile 122 est généralement le cylindre inférieur du dispositif et les moyens élastiques de mise en contact 130 sont placés sous le cylindre inférieur 122 et exercent une force verticale vers le haut. Le cylindre mobile 122 peut toutefois être le cylindre supérieur. Les cylindres peuvent également être placés au même niveau horizontal, la direction de déplacement du film F étant alors verticale dans la zone de laminage tel que schématisé sur la figure 7.

Les ensembles fixe 110 et mobile 120 peuvent comprendre respectivement un seul cylindre (type laminoir dénommé DUO) tel que schématisé sur les figures 2, 5 et 6, deux cylindres chacun (type laminoir dénommé QUARTO) tel que schématisé sur la figure 7 sur laquelle l'ensemble fixe 110 comprend un cylindre de travail 112a en contact avec le film et en appui sur un cylindre de support 112b et l'ensemble mobile 120 comprend également un cylindre de travail 122a, en regard du cylindre 112a et un cylindre de support 122b, voire plus de deux cylindres (par exemple laminoir connu sous l'expression « voûte de Zenzimir », etc.).

Le cylindre avec ses tourillons est de préférence monobloc pour bénéficier d'une bonne géométrie et surtout d'une stabilité dimensionnelle optimale quelles que soient les conditions de fonctionnement (température et contraintes de laminage notamment).

On notera que l'invention dans ses modes de réalisation décrits est très avantageuse puisqu'elle permet d'obtenir une précision environ égale au micron sur une largeur de film double de la largeur classique de deux films destinés à être placés dans une batterie (soit environ 31 cm au total)

La description qui précède, à des fins de simplification, mentionne le laminage « d'un film ». Cependant l'invention ne doit en aucune façon être limitée à un type particulier de film, en particulier à un film monocouche. On pourrait laminer un film multicouche d'un seul tenant ou effectuer des opérations supplémentaires de façon concomitante à l'opération de laminage.

On a par exemple représenté sur la figure 2 le complexage et le laminage également conforme à l'invention d'une structure composite comprenant en entrée 3 films distincts F0, F1 et F2, par exemple un film d'électrolyte central F0 pris en sandwich entre deux films de protection respectivement sur chaque face F1 et F2 du film F0 (par exemple des films en polyéthylène), provenant en entrée de 3 sources séparées, mais réunis en sortie de laminage en un film commun unique F. Dans ce mode de réalisation, on notera que seul le film F0 est écrasé ou laminé et que les films de protection sont assemblés sur le film F0 pendant le laminage de celui-ci. Les composants du film F0, F1 et F2 en entrée du laminage et le film F en sortie de laminage sont guidés et acheminés par des jeux de rouleaux schématisés sur les figures annexées, connus en soi et susceptibles de faire l'objet de nombreux modes de réalisation de sorte que leurs structures et positionnement ne seront pas décrits dans la présente demande de brevet.

## Revendications

1. Dispositif de laminage comprenant un premier ensemble fixe (110) relié à un bâti (106) du dispositif et comportant au moins un premier cylindre de laminage (112) monté à rotation autour de son axe (X1) et un deuxième ensemble (120), mobile, comportant au moins un deuxième cylindre de laminage (122) monté à rotation autour de son axe (X2), le deuxième ensemble (120) étant mobile selon au moins un degré de liberté relativement au premier ensemble fixe (110), de sorte que l'axe (X2) du deuxième cylindre (122) soit mobile relativement à celui (X1) du premier cylindre (110) pour régler l'écartement entre les cylindres (110, 120), **caractérisé en ce que** le dispositif de laminage comprend :
- des moyens élastiques de mise au contact (130) qui exercent une première force sur l'ensemble mobile (120) dans le sens d'un rapprochement du premier ensemble fixe (110), ces moyens élastiques de mise au contact (130) étant configurés pour céder lorsque la force de réaction exercée par l'ensemble mobile (120) sur ceux-ci est supérieure à une force de seuil prédéterminée, et
- des moyens de réglage (160) qui exercent sur l'ensemble mobile (120) une deuxième force ayant une composante essentiellement opposée à la force exercée par les moyens élastiques de mise au contact (130).

2. Dispositif de laminage selon la revendication 1, **caractérisé en ce que** les moyens de réglage (160) comprennent des moyens mécaniques (162, 170) qui définissent une butée mécanique réglable pour le deuxième ensemble mobile (120).

3. Dispositif de laminage selon l'une des revendications 1 ou 2, **caractérisé en ce que** la force exercée par les moyens élastiques de mise au contact (130) est comprise entre la force exercée par le film (F) passant entre les deux cylindres (112, 122) dans des conditions normales de fonctionnement et la force de réaction atteinte en cas de bourrage.

4. Dispositif de laminage selon l'une des revendications 1 à 3, **caractérisé en ce que** la force exercée par les moyens élastiques de mise au contact (130) est égale à une valeur de seuil correspondant aux besoins de laminage plus une force de surcharge pour assurer le contact sur les moyens de réglage (160) en garantissant la stabilité du système.

5. Dispositif de laminage selon l'une des revendications 1 à 4, **caractérisé en ce que** le cylindre mobile (122) est monté à rotation dans deux paliers situés respectivement sur ses extrémités et les moyens élastiques de mise en contact (130) sont configurés pour que les efforts qu'ils appliquent sur l'ensemble mobile (120) soient répartis à égalité sur chaque palier du cylindre mobile (122), les moyens élastiques de mise en contact (130) étant de préférence à cette fin centrés par rapport aux paliers.

6. Dispositif de laminage selon l'une des revendications 1 à 5, **caractérisé en ce que** les moyens élastiques de mise au contact (130) comprennent une enveloppe élastique déformable (131), de préférence en caoutchouc, remplie d'un fluide, de préférence un gaz, et comprenant une valve de sortie de fluide (132) s'ouvrant lorsque la pression est supérieure à une pression prédéterminée.

7. Dispositif de laminage selon l'une des revendications 1 à 5, **caractérisé en ce que** les moyens élastiques de mise au contact (130) comprennent un ensemble mécanique (133) assurant une sollicitation élastique de l'ensemble mobile (120) vers une position de contact mais comportant un fusible mécanique intégré, tel qu'une pièce à amorce de rupture calculée pour céder lorsque l'effort de réaction qui lui est appliqué atteint un seuil correspondant à l'effort résultant d'un bourrage.

8. Dispositif de laminage selon l'une des revendications 1 à 7, **caractérisé en ce que** les moyens de réglage (160) comprennent au moins un levier mécanique (164, 170) comprenant un point d'appui (A, D, 165, 171), par exemple un axe de rotation, sur un élément solidaire de l'ensemble fixe (110), le ou au moins l'un des leviers étant également en contact avec l'ensemble mobile (120) et avec un élément de commande de réglage (162), la distance entre le point de contact (B) avec l'ensemble mobile (120) et le point d'appui (A) étant inférieure à la distance entre le point de contact (E) avec l'élément de réglage (162) et le point d'appui (A), afin d'obtenir un réglage fin et une multiplication d'effort.

9. Dispositif de laminage selon l'une des revendications 1 à 8, **caractérisé en ce que** les moyens de réglage (160) comprennent plusieurs leviers (164, 170) en série.

10. Dispositif de laminage selon l'une des revendications 1 à 9, **caractérisé en ce que** les moyens de réglage (160) comprennent des moyens de rappel (180) assurant un maintien de la contrainte sur au moins un levier (162, 170), ces moyens de rappel (180) étant adaptés pour maintenir la chaîne cinématique définie entre un élément d'entrée (162) de commande de réglage et une butée de sortie (170), en contact avec l'élément d'entrée de commande (162).

11. Dispositif de laminage selon l'une des revendications 1 à 10, **caractérisé en ce que** l'élément de commande des moyens de réglage (160) comprend un dispositif mobile (162), par exemple une vis manuelle, une came, ou un actionneur électrique avec vis à bille effectuant un appui sur un levier (164) et entraîné manuellement ou automatiquement.

12. Dispositif de laminage selon l'une des revendications 1 à 11, **caractérisé en ce que** les moyens de réglage (160) comprennent une chaine cinématique formée d'éléments mécaniques en appui mutuel (162, 164, 170, 120), et dans lequel les contacts entre les éléments mécaniques dans la chaîne cinématique sont définis par des moyens en saillie, par exemple une goupille, définissant un contact ponctuel ou linéaire.

13. Dispositif de laminage selon l'une des revendications 1 à 12, **caractérisé en ce qu'**il comprend un capteur (192) solidaire d'un élément parmi l'ensemble mobile (110) et l'ensemble fixe (120) et comprenant une portion mobile (194) destinée à entrer en contact avec une butée (108) de l'autre élément parmi l'ensemble mobile (120) et l'ensemble fixe (110), afin de mesurer le déplacement relatif de l'ensemble mobile (110) du dispositif de laminage.

14. Dispositif de laminage selon l'une des revendications 1 à 13, **caractérisé en ce que** l'ensemble mobile (120) est mobile en pivotement relativement à l'ensemble fixe (110), de préférence deux bras supports pivotants (124) étant prévus, un bras (124) étant situé à chaque extrémité du cylindre mobile (122), entre cette extrémité et le bâti (106) du dispositif de laminage.

15. Dispositif selon la revendication précédente, dans lequel les deux bras (124) situés à chaque extrémité du cylindre mobile (122) sont reliés par au moins une barre transversale solidaire de chacun des deux bras (124), formant dispositif anti-roulis.

16. Procédé de mise en marche d'un dispositif selon l'une des revendications 1 à 15, **caractérisé en ce qu'**il comprend :
- une première étape lors de laquelle on contraint les moyens élastiques de mise en contact (130) jusqu'à une force de seuil prédéterminée pour qu'ils exercent une force sur le cylindre mobile (122) le mettant en contact avec le cylindre fixe (112), avec un effort prédéterminé et
- une deuxième étape lors de laquelle on s'oppose aux moyens élastiques de mise en contact (130) en agissant sur les moyens de réglage (160) de façon à modifier la position du cylindre mobile (122).

17. Procédé selon la revendication 16, **caractérisé en ce que**, le dispositif comprenant deux capteurs de déplacement de l'ensemble mobile (122), lorsque l'on détecte à l'aide de chaque capteur le début du déplacement de l'ensemble mobile (120) relativement à l'ensemble fixe (110) correspondant au décollement du cylindre mobile (122) relativement au cylindre fixe (112), on initialise un zéro de référence pour chaque capteur.

18. Electrolyte obtenu par laminage à l'aide d'un dispositif conforme à l'une des revendications 1 à 15 et/ou la mise en oeuvre d'un procédé conforme à l'une des revendications 16 ou 17, **caractérisé en ce qu'**il possède une épaisseur inférieure à 15 microns, avantageusement inférieure ou égale à 10 microns,avec une variation d'épaisseur selon une coupe transversale ou longitudinale inférieure à +/- 2 microns pour une largeur supérieure ou égale à 150mm, par exemple de l'ordre de 30cm.

19. Electrolyte selon la revendication 18 **caractérisé en ce qu'**il comprend au moins un polymère et un sel de lithium, notamment au moins deux types de polymères, tel que le polyfluorure de vinylidène (PVDF) et les polymères d'oxyde d'éthylène (POE), le sel de lithium étant du LiTFSI (sel de bis(TriFluoromethylSulfonyl)Imide de Lithium).

20. Ensemble de stockage d'énergie, notamment une batterie, comprenant un électrolyte conforme à l'une des revendications 18 ou 19 qui possède une épaisseur inférieure à 15 microns, avantageusement inférieure ou égale à 10 microns,avec une variation d'épaisseur selon une coupe transversale ou longitudinale inférieure à +/- 2 microns pour une largeur supérieure ou égale à 150mm, par exemple de l'ordre de 30cm.

## Patentansprüche

1. Walzvorrichtung, umfassend eine erst feste Gruppe (110), die mit einem Gestell (106) der Vorrichtung verbunden ist und mindestens einen ersten Walzzylinder (112) aufweist, der um seine Achse (X1) rotierend montiert ist, und eine zweite bewegliche Gruppe (120), die mindestens einen zweiten Walzzylinder (122) aufweist, der um seine Achse (X2) rotierend montiert ist, wobei die zweite Gruppe (120) gemäß mindestens einem Freiheitsgrad relativ zur ersten festen Gruppe (110) beweglich ist, so dass die Achse (X2) des zweiten Zylinders (122) relativ zu der (X1) des ersten Zylinders (110) beweglich ist, um den Abstand zwischen den Zylindern (110, 120) einzustellen, **dadurch gekennzeichnet, dass** die Walzvorrichtung umfasst:
- elastische Inkontaktversetzungsmittel (130), die eine erste Kraft auf die bewegliche Gruppe (120) im Sinn einer Annäherung der ersten festen Gruppe (110) ausüben, wobei diese elastischen Inkontaktversetzungsmittel (130) konfiguriert sind, nachzugeben, wenn die von der mobilen Gruppe (120) auf diese ausgeübte Reaktionskraft größer als eine vorbestimmte Grenzwertkraft ist, und
- Einstellmittel (160), die auf die mobile Gruppe (120) eine zweite Kraft ausüben mit einer Komponente, die im Wesentlichen der entgegengesetzt der Kraft ist, die von den elastischen Inkontaktversetzungsmitteln (130) ausgeübt wird.

2. Walzvorrichtung nach Anspruch 1, **dadurch gekennzeichnet, dass** die Einstellmittel (160) mechanische Mittel (162, 170) umfassen, die einen einstellbaren mechanischen Anschlag für die zweite mobile Gruppe (120) definieren.

3. Walzvorrichtung nach einem der Ansprüche 1 oder 2, **dadurch gekennzeichnet, dass** die von den elastischen Inkontaktversetzungsmitteln (130) ausgeübte Kraft zwischen der Kraft der Folie (F), die zwischen den zwei Zylindern (112, 122) unter normalen Betriebsbedingungen passiert, und der im Fall eines Staus erreichten Reaktionskraft inbegriffen ist.

4. Walzvorrichtung nach einem der Ansprüche 1 bis 3, **dadurch gekennzeichnet, dass** die von den elastischen Inkontaktversetzungsmitteln (130) ausgeübte Kraft gleich einem Grenzwert ist, der dem Walzbedarf entspricht, plus einer Überlastkraft, um den Kontakt auf die Einstellmittel (160) bei Gewährleistung der Stabilität des Systems sicherzustellen.

5. Walzvorrichtung nach einem der Ansprüche 1 bis 4, **dadurch gekennzeichnet, dass** der mobile Zylinder (122) in zwei Lagern rotierend montiert ist, die sich jeweils an seinen Enden befinden, und die elastischen Inkontaktversetzungsmittel (130) konfiguriert sind, damit die Kräfte, die sie auf die mobile Gruppe (120) ausüben, gleich auf jedes Lager des mobilen Zylinders (122) verteilt sind, wobei die elastischen Inkontaktversetzungsmittel (130) zu diesem Zweck vorzugsweise in Bezug zu den Lagern zentriert sind.

6. Walzvorrichtung nach einem der Ansprüche 1 bis 5, **dadurch gekennzeichnet, dass** die elastischen Inkontaktversetzungsmittel (130) eine verformbare elastische Hülle (131), vorzugsweise aus Kautschuk, gefüllt mit einem Fluid, vorzugsweise einem Gas, umfassen, und ein Fluidausgangsventil (132) umfassen, das sich öffnet, wenn der Druck über einem vorbestimmten Druck liegt.

7. Walzvorrichtung nach einem der Ansprüche 1 bis 5, **dadurch gekennzeichnet, dass** die elastischen Inkontaktversetzungsmittel (130) eine mechanische Gruppe (133) umfassen, die eine elastische Beanspruchung der mobilen Gruppe (120) in Richtung einer Kontaktposition sichert, aber eine integrierte mechanische Sicherung wie ein Teil mit berechnetem Bruchpunkt aufweist, um nachzugeben, wenn die Reaktionskraft, die darauf wirkt, eine Grenze erreicht, die der Kraft entspricht, die sich aus einem Stau ergibt.

8. Walzvorrichtung nach einem der Ansprüche 1 bis 7, **dadurch gekennzeichnet, dass** die Einstellmittel (160) mindestens einen mechanischen Hebel (164, 170) umfassen, der einen Abstützpunkt (A, D, 165, 171), beispielsweise eine Rotationsachse, auf einem mit der festen Gruppe (110) fest verbundenen Element umfasst, wobei der oder mindestens einer der Hebel ebenfalls mit der mobilen Gruppe (120) und mit einem Einstellungssteuerelement (162) im Kontakt ist, wobei der Abstand zwischen dem Kontaktpunkt (B) mit der mobilen Gruppe (120) und dem Abstützpunkt (A) kleiner ist als der Abstand zwischen dem Kontaktpunkt (E) mit dem Einstellelement (162) und dem Abstützpunkt (A), um eine Feineinstellung und eine Kraftmultiplikation zu erhalten.

9. Walzvorrichtung nach einem der Ansprüche 1 bis 8, **dadurch gekennzeichnet, dass** die Einstellmittel (160) mehrere Hebel (164, 170) in Reihe umfassen.

10. Walzvorrichtung nach einem der Ansprüche 1 bis 9, **dadurch gekennzeichnet, dass** die Einstellmittel (160) Rückstellmittel (180) umfassen, die einen Bestand der Beanspruchung mindestens eines Hebels (162, 170) sichern, wobei diese Rückstellmittel (180) ausgebildet sind, um die zwischen einem Eingangseinstellungssteuerelement (162) und einem Ausgangsanschlag (170) im Kontakt mit dem Eingangssteuerelement (162) definierte kinematische Kette aufrechtzuerhalten.

11. Walzvorrichtung nach einem der Ansprüche 1 bis 10, **dadurch gekennzeichnet, dass** das Steuerelement der Einstellmittel (160) eine bewegliche Vorrichtung (162), beispielsweise eine manuelle Schraube, einen Nocken oder einen elektrischen Aktuator mit Kugelschraube umfasst, die eine Abstützung auf einen Hebel (164) ausübt und manuell oder automatisch angetrieben wird.

12. Walzvorrichtung nach einem der Ansprüche 1 bis 11, **dadurch gekennzeichnet, dass** die Einstellmittel (160) eine kinematische Kette umfassen, die von mechanischen Elementen in gegenseitiger Abstützung (162, 164, 170, 120) gebildet ist, und wobei die Kontakte zwischen den mechanischen Elementen in der kinematischen Kette von hervorstehenden Mitteln, beispielsweise einem Stift, der einen punktuellen oder linearen Kontakt definiert, definiert sind.

13. Walzvorrichtung nach einem der Ansprüche 1 bis 12, **dadurch gekennzeichnet, dass** sie einen Sensor (192) umfasst, die mit einem Element von der mobilen Gruppe (110) und der festen Gruppe (120) fest verbunden ist und einen beweglichen Abschnitt (194) umfasst, der bestimmt ist, mit einem Anschlag (108) des anderen Elements von der mobilen Gruppe (120) und der festen Gruppe (110) in Kontakt zu treten, um die relative Verlagerung der mobilen Gruppe (110) der Walzvorrichtung zu messen.

14. Walzvorrichtung nach einem der Ansprüche 1 bis 13, **dadurch gekennzeichnet, dass** die mobile Gruppe (120) schwenkend relativ zur festen Gruppe (110) bewegbar ist, wobei vorzugsweise zwei schwenkende Stützarme (124) vorgesehen sind, wobei sich ein Arm (124) an jedem Ende des mobilen Zylinders (122) zwischen diesem Ende und dem Gestell (106) der Walzvorrichtung befindet.

15. Vorrichtung nach vorangehendem Anspruch, wobei die zwei Arme (124), die sich an jedem Ende des mobilen Zylinders (122) befinden, mittels mindestens einer Querstange verbunden sind, die mit jedem der zwei Arme (124) fest verbunden sind, wobei eine Anti-Schlinger-Vorrichtung gebildet wird.

16. Verfahren für das Ingangsetzen einer Vorrichtung nach einem der Ansprüche 1 bis 15, **dadurch gekennzeichnet, dass** es umfasst:
- einen ersten Schritt, bei dem die elastischen Inkontaktversetzungsmittel (130) bis zu einer vorbestimmten Grenzwertkraft beansprucht werden, damit sie eine Kraft auf den mobilen Zylinder (122) ausüben, die ihn mit dem festen Zylinder (112) mit einer vorbestimmten Kraft in Kontakt versetzt, und
- einen zweiten Schritt, bei dem den elastischen Inkontaktversetzungsmitteln (130) durch Einwirken auf die Einstellmittel (160) entgegengewirkt wird, um die Position des mobilen Zylinders (122) zu verändern.

17. Verfahren nach Anspruch 16, **dadurch gekennzeichnet, dass**, wobei die Vorrichtung zwei Verlagerungssensoren der mobilen Gruppe (122) umfasst, wenn mit Hilfe jedes Sensors der Beginn der Verlagerung der mobilen Gruppe (120) relativ zur festen Gruppe (110) festgestellt wird, was dem Lösen des mobilen Zylinders (122) relativ zum festen Zylinder (112) entspricht, für jeden Sensor ein Referenz-Null initialisiert wird.

18. Elektrolyt, erhalten durch Walzen mit Hilfe einer Vorrichtung nach einem der Ansprüche 1 bis 15 und/oder Umsetzung eines Verfahrens nach einem der Ansprüche 16 oder 17, **dadurch gekennzeichnet, dass** er eine Dicke unter 15 Mikron, in vorteilhafter Weise unter oder von gleich 10 Mikron, besitzt, mit einer Dickenvariation gemäß einem Quer- oder Längsschnitt unter +/-2 Mikron bei einer Breite über oder von gleich 150 mm, beispielsweise in der Größenordnung von 30 cm.

19. Elektrolyt nach Anspruch 18, **dadurch gekennzeichnet, dass** er mindestens ein Polymer und ein Lithiumsalz, insbesondere mindestens Polymerarten wie das Polyvinylidenfluorid (PVDF) und die Ethylenoxid-Polymere (POE) umfasst, wobei das Lithiumsalz LiTFSI (Lithiumbistrifluoromethansulfonylimid) ist.

20. Energiespeichergruppe, insbesondere eine Batterie, umfassend ein Elektrolyt nach einem der Ansprüche 18 oder 19, mit einer Dicke unter 15 Mikron, in vorteilhafter Weise unter oder gleich 10 Mikron, mit einer Dickenvariation gemäß einem Quer- oder Längsschnitt unter +/-2 Mikron bei einer Breite über oder von gleich 150 mm, beispielsweise in der Größenordnung von 30 cm.

## Claims

1. A rolling device comprising a first fixed assembly (110) connected to a frame (106) of the device and comprising at least one first rolling cylinder (112) rotatably mounted about its axis (X1) and a second assembly (120), mobile, comprising at least one second rolling cylinder (122) rotatably mounted about its axis (X2), the second assembly (120) being mobile according to at least one degree of freedom relative to the first fixed assembly (110), such that the axis (X2) of the second cylinder (122) is mobile relative to that (X1) of the first cylinder (110) to control the distance between the cylinders (110, 120), **characterized in that** the rolling device comprises:
- resilient contact means (130) which exert a first force on the mobile assembly (120) in the direction of approximation of the first fixed assembly (110), these resilient contact means (130) being configured to give way when the reaction force exerted by the mobile assembly (120) on the latter is greater than a predetermined threshold force, and
- control means (160) which exert on the mobile assembly (120) a second force having a component essentially opposite to the force exerted by the resilient contact means (130).

2. The rolling device according to claim 1, **characterized in that** the control means (160) comprise mechanical means (162, 170) which define a mechanical stop adjustable for the second mobile assembly (120).

3. The rolling device according to one of claims 1 or 2, **characterized in that** the force exerted by the resilient contact means (130) is between the force exerted by the film (F) passing between the two cylinders (112, 122) in normal operating conditions and the reaction force attained in case of clogging.

4. The rolling device according to one of claims 1 to 3, **characterized in that** the force exerted by the resilient contact means (130) is equal to a threshold value corresponding to the rolling needs plus an overload force to ensure contact on the control means (160) by guaranteeing the stability of the system.

5. The rolling device according to one of claims 1 to 4, **characterized in that** the mobile cylinder (122) is rotatably mounted in two bearings located respectively on its ends and the resilient contact means (130) are configured so that the forces they apply to the mobile assembly (120) are distributed equally on each bearing of the mobile cylinder (122), the resilient contact means (130) for this purpose preferably being centred relative to the bearings.

6. The rolling device according to one of claims 1 to 5, **characterized in that** the resilient contact means (130) comprise a deformable elastic envelope (131), preferably made of rubber, filled with fluid, preferably gas, and comprising an output valve for fluid (132) opening when the pressure is greater than a predetermined pressure.

7. The rolling device according to one of claims 1 to 5, **characterized in that** the resilient contact means (130) comprise a mechanical assembly (133) ensuring resilient stressing of the mobile assembly (120) towards a contact position but comprising an integrated mechanical fuse such as a break initiator piece calculated to give way when the reaction force which is applied thereto reaches a threshold corresponding to the force resulting from clogging.

8. The rolling device according to one of claims 1 to 7, **characterized in that** the control means (160) comprise at least one mechanical lever (164, 170) comprising a support point (A, D, 165, 171), for example an axis of rotation, on an element attached to the fixed assembly (110), the lever or at least one of the levers also being in contact with the mobile assembly (120) and with a control adjusting element (162), the distance between the point of contact (B) with the mobile assembly (120) and the support point (A) being less than the distance between the point of contact (E) with the adjusting element (162) and the support point (A), to produce fine adjustment and force multiplication.

9. The rolling device according to one of claims 1 to 8, **characterized in that** the control means (160) comprise several levers (164, 170) in series.

10. The rolling device according to one of claims 1 to 9, **characterized in that** the control means (160) comprise return means (180) ensuring maintaining of strain on at least one lever (162, 170), these return means (180) being adapted to keep the kinematic chain defined between an input element (162) of adjust control and an output stop (170), in contact with the input control element (162).

11. The rolling device according to one of claims 1 to 10, **characterized in that** the control element of the control means (160) comprises a mobile device (162), for example a manual screw, a cam, or an electric actuator with ball screw supported on a lever (164) and driven manually or automatically.

12. The rolling device according to one of claims 1 to 11, **characterized in that** the control means (160) comprise a kinematic chain formed by mechanical elements in mutual support (162, 164, 170, 120), and wherein the contacts between the mechanical elements in the kinematic chain are defined by protruding means, for example a pin, defining point or linear contact.

13. The rolling device according to one of claims 1 to 12, **characterized in that** it comprises a sensor (192) attached to an element of the mobile assembly (110) and the fixed assembly (120) and comprising a mobile portion (194) intended to make contact with a stop (108) of the other element of the mobile assembly (120) and the fixed assembly (110), to measure relative displacement of the mobile assembly (110) of the rolling device.

14. The rolling device according to one of claims 1 to 13, **characterized in that** the mobile assembly (120) is mobile to pivot relative to the fixed assembly (110), preferably two pivoting support arms (124) being provided, one arm (124) being located at each end of the mobile cylinder (122), between this end and the frame (106) of the rolling device.

15. The device according to the preceding claim, wherein the two arms (124) located at each end of the mobile cylinder (122) are connected by at least one transversal bar attached to each of the two arms (124), forming an anti-roll device.

16. A startup method of a device according to one of claims 1 to 15, **characterized in that** it comprises:
- a first step during which the resilient contact means (130) are strained as far as a predetermined threshold force so that they exert a force on the mobile cylinder (122) putting it in contact with the fixed cylinder (112), with a predetermined force and
- a second step during which the resilient contact means (130) are opposed by acting on the control means (160) so as to modify the position of the mobile cylinder (122).

17. The method according to claim 16, **characterized in that** with the device comprising two displacement sensors of the mobile assembly (122), when the start of displacement of the mobile assembly (120) relative to the fixed assembly (110) corresponding to the delamination of the mobile cylinder (122) relative to the fixed cylinder (112) is detected by means of each sensor, zero reference is initialised for each sensor.

18. An electrolyte obtained by rolling means of a device according to one of claims 1 to 15 and/or execution of a method according to one of claims 16 or 17, **characterized in that** it has a thickness less than 15 microns, advantageously less than or equal to 10 microns, with a variation in thickness according to a transversal or longitudinal cross-section less than +/-2 microns for a width greater than or equal to 150 mm, for example of the order of 30 cm.

19. The electrolyte according to claim 18 **characterized in that** it comprises at least one polymer and a lithium salt, especially at least two types of polymers, such as polyvinylidene fluoride (PVDF) and ethylene oxide polymers (POE), lithium salt being LiTFSI (salt of Lithium bis(TriFluoromethylSulfonyl) Imide).

20. A power storage assembly, especially a battery, comprising an electrolyte according to one of claims 18 or 19 which has a thickness of less than 15 microns, advantageously less than or equal to 10 microns, with a variation in thickness according to a transversal or longitudinal cross-section less than +/-2 microns for a width greater than or equal to 150 mm, for example of the order of 30 cm.
